# EUROPEAN PATENT SPECIFICATION

(11) **EP 1 636 302 B1**
(45) Date of publication and mention of the grant of the patent: **24.07.2019**
(21) Application number: 04776377.6
(22) Date of filing: 08.06.2004
(51) Int. Cl.: C08K 3/04, C08K 3/34, H01B 1/24, H01B 3/44

(54) **STRIPPABLE SEMI-CONDUCTIVE INSULATION SHIELD**
ABZIEHBARER HALBLEITENDER ISOLIERSCHIRM
BLINDAGE ISOLANT SEMI-CONDUCTEUR PELABLE

(30) Priority: 09.06.2003 US 457571
(43) Date of publication of application: 22.03.2006
(60) Divisional application: 18206508.6
(73) Proprietor: Union Carbide Chemicals & Plastics Technology LLC, Danbury, CT 06817-0001 (US)
(72) Inventor: PANG, Kawai, P., Belle Mead, NJ 08502 (US); PERSON, Timothy, J., Freehold, NJ 07728 (US)
(74) Representative: Boult Wade Tennant LLP
(86) International application number: PCT/US2004/018234
(87) International publication number: WO 2005/017014

(56) References cited:
- EP-A- 1 052 654
- US-B1- 6 492 453

## Description

A typical electric power cable generally comprises one or more electrical conductors in a cable core that is surrounded by several layers of polymeric materials including a first or inner semiconducting shield layer (conductor or strand shield), an insulation layer, a second or outer semiconducting shield layer (insulation shield), a metallic tape or wire shield, and a protective jacket. The outer semiconducting shield can be either bonded to the insulation or strippable, with most applications using strippable shields. The inner semiconducting shield is generally bonded to the insulation layer. Additional layers within this construction such as moisture impervious materials are often incorporated.

Polymeric semiconducting shields have been utilized in multilayered power cable construction for many decades. Generally, they are used to fabricate solid dielectric power cables rated for voltages greater than 1 kiloVolt (kV). These shields are used to provide layers of intermediate conductivity between the high potential conductor and the primary insulation, and between the primary insulation and the ground or neutral potential. The volume resistivity of these semiconducting materials is typically in the range of 10⁻¹ to 10⁸ ohm-cm when measured on a completed power cable construction using the methods described in ICEA S-66-524, section 6.12, or IEC 60502-2 (1997), Annex C.

Typical strippable shield compositions contain a polyolefin such as ethylene/vinyl acetate copolymer with high vinyl acetate content, conductive carbon black, an organic peroxide crosslinking agent, and other conventional additives such as a nitrile rubber, which functions as a strip force reduction aid, processing aids, and antioxidants. These compositions are usually prepared in pellet form. Polyolefin formulations such as these are disclosed in United States Patent Serial No. 4,286,023 and European Patent Application 420 271.

While it is important that the insulation shield adhere to the insulation layer, it is also important that the insulation shield can be stripped with relative ease in a short period of time. It is found that the typical insulation shield does not have optimum strippability with respect to the insulation layer. Strippability is very important in that it is not only time saving, but enhances the quality of the splice or terminal connection.

Current raw materials employed for semiconductive strippable insulation shield (IS) compositions for medium voltage power cables are usually based on a highly, polar polymer blend containing ethylene-vinyl-acetate copolymer (EVA) and nitrile butadiene rubber (NBR) or just a high vinyl-acetate (greater than 33 weight percent vinyl-acetate) EVA copolymer. Known strippable insulation shield products contain 5 to 20 weight percent NBR. However, NBR has been demonstrated to cause significant loss of adhesion between the semiconductive strippable insulation shield and insulation layers when the cable is subjected to thermal aging-a process known as stress relaxation.

This loss of adhesion is particularly severe when the insulation material contains low molecular weight species that do not crystallize readily on cooling when the cable is subjected to temperatures above the melting point of the insulation layer, e.g., between 100 and 110 degrees Celsius. Loss of adhesion causes the power cable to fail the customers' specifications and creates commercial problems. Loss of adhesion can be minimized by minimizing the concentration of NBR in the insulation shield.

Minimizing NBR, however, will create another problem -- adhesion or strip tension will be too high to meet customers' requirement on strippability.

Generally the prior art used high amounts of vinyl acetate to provide strippability, but high amounts of vinyl acetate result in residual acetic acid which creates processing problems, equipment corrosion, sintering and high costs as generally discussed in WO-0229829.

EP 1 052 654 relates to a power cable having a semiconducting shield.

US 6,492,453 relates to zero halogen thermoplastic elastomer compositions based on olefinic polymers.

To summarize, three approaches have been used in the prior art to achieve acceptable strippability and thermal stability: i) providing an insulation shield of ethylene/vinyl-acetate copolymer having at least 33 weight percent vinyl acetate and an acrylonitrile/butadiene rubber (NBR), which resulted in poor thermal stability; ii) providing an ethylene/vinyl acetate having 40 weight percent or greater vinyl acetate, and no NBR, which resulted in poor thermal stability ; and iii) providing an ethylene/ethyl acrylate copolymer insulation shield which resulted in good stability, but poor strippability.

Thus, there remains an unmet need to invent a new raw materials technology that can provide good strippability in an IS formulation that contains minimal (less than 5 weight percent) or no NBR without requiring a high amount of vinyl-acetate EVA copolymers.

Nano-particles have been used with power cable insulation as described in EP 1 033 724 Al, but they have not been used in insulation shield compositions or used with insulation shields. Moreover, they have not been suggested for solving strippability problems and improving thermal stability that has been associated with strippability problems.

An object of this invention, therefore, is to provide a power cable having an insulation layer surrounded by an insulation shield which is appropriately strippable and will not loose it adhesion and maintain a satisfactory level of thermal stability.

Other objects and advantages will become apparent with reference to the following specification.

### SUMMARY

In the first aspect of the invention there is provided a power cable comprising:
(a) an electrical conductor;
(b) an insulation layer which surrounds the electrical conductor; and
(c) an insulation shield layer which surrounds and is contiguous with the insulation layer,
the insulation shield layer comprising a cross-linked composition made from a blend which comprises
(i) from 15 to 40 weight percent of a copolymer of ethylene and an unsaturated ester selected from the group consisting of vinyl esters, acrylic acid esters, methacrylic acid esters and mixtures thereof;
(ii) at least 1 weight percent nano-particles which have been contacted with a swelling agent which includes an onium ion; and
(iii) from 10 to 50 weight percent carbon black,
wherein the copolymer, the nano-particles and the carbon black being in amounts which will provide the insulation shield with a strip tension of greater than 13.3 N per 1.27 cm (3 pounds per half inch) at 23 degrees Celsius after being stored at 100 degrees Celsius for 2 weeks and an initial strip force of not greater than 106.8 N per 1.27 cm (24 pounds per half inch) at 23 degrees Celsius, wherein the strip tension and initial strip force is determined using the Test Method for Plaque Adhesion disclosed herein.

It has been unexpectedly found that swellable nano-particles, such as layered nano-particles, which are treated or contacted with one or more swelling agents, such as a surfactant, will improve the thermal stability of insulation shield in power cables and also permit the use of low levels of NBR and vinyl-acetate EVA copolymers in such insulation shield. The swellable nano-particles include nano clays, silicates, carbon single walled nano tubes, carbon nano tube fibrils and synthetic minerals having a length of from 1 to 10,000 nm and a diameter of 1 to 100 mm. The swelling agent is used to improve the interaction of polymer and the nano-particles in the insulation shield to attain exfoliation or spreading of layers which are in the nano- particles. When the swelling agent treated nano-particles are present in a crosslinkable semiconductive strippable insulation shield composition, they surprisingly and significantly affect the thermal stability of the adhesion between the semiconductive strippable insulation shield and a crosslinkable polyolefinic insulation.

The strippable shield composition generally contains polar polymers such as ethylene-vinyl-acetate copolymer, ethylene-ethyl-acrylate copolymer, low amounts or no nitrile rubber, carbon black, swelling agent treated nano-particles, and other additives, such as processing aids, antioxidants, and crosslinking peroxides. The swelling agent treated nano-particles should contain moieties that allow them to interact effectively with polar polymers during a mixing
process. Swelling agents or surfactants suitable for treating nano-particles to provide thermal stability for adhesion of an insulation shield layer to an insulation composition application include onium ions with organic moieties, such as quaternary ammonium salts with organic moieties which are commercially available under the trade names Arquad or Armeen from Akzo Nobel, phosphonium ions with organic moieties imidazolium ions with organic moieties, and sulfonium ions with organic moieties.

The use of swellable nano-particles in strippable insulation shield formulations provides control of strippability and thermal stability of adhesion without the need of expensive polar polymers. Swellable nano-particles also may offer additional advantages such as improved resistance to pellet agglomeration when used in a low melting point and sticky polymer like EVA.

There is provided a cross-linkable insulation shield composition, which when crosslinked, is effective to provide an insulation shield for power cable which has strip force of greater than 13.3 N per 1.27 cm (3 pounds per half inch) at 23 degrees Celsius after being stored at 100 degrees Celsius for 2 weeks and an initial strip force of not greater than 106.8 N per 1.27 cm (24 pounds per half inch) at 23 degrees Celsius. The cross-linkable insulation shield composition which is effective to provide a cross-linked insulation shield includes a cross-linkable blend of a copolymer of ethylene and an unsaturated ester selected from the group consisting of vinyl esters, acrylic acid esters, methacrylic acid esters and mixtures thereof; swellable nano-particles which have been contacted with a swelling agent which includes an onium ion; and carbon black. The copolymer, nano- particles and carbon black are in amounts which will provide the insulation shield with a strip force of greater than 13.3 N per 1.27 cm (3 pounds per half inch) at 23 degrees Celsius after being stored at 100 degrees Celsius for 2 weeks when cured and an initial strip force of not greater than 106.8 N per 1.27 cm (24 pounds per half inch) at 23 degrees Celsius.

The insulation shield composition has from 15 to 40 weight percent of the copolymer of ethylene and unsaturated ester, at least one weight percent nano-particles which have been treated with the swelling agent and from 10 to 50 weight percent carbon black. The cross-linkable insulation shield composition minimizes NBR content, yet still minimizes adhesion loss and also provides acceptable strippability. Generally there is less than 5 weight percent, and preferably less than one weight percent NBR, in the cross-linkable shield composition.

The cable of the invention comprises an electrical conductor or a core of electrical conductors surrounded by an insulation layer and which insulation layer is surrounded by and contiguous with an insulation shield layer which includes the nano-particles. The insulation shield layer comprises a cross-linked insulation shield composition as described above which includes the nano-particles which have been contacted with a swelling agent which includes an onium ion. The insulation layer can include any resin which is appropriate for power cable insulation, but common insulation layers comprise polyethylene, ethylene/propylene copolymer rubber, ethylene/propylene/diene terpolymer rubber, and mixtures thereof.

Insulation shield using lower vinyl-acetate content is thermally stable and thus allows a higher-line speed during cable manufacturing.

### DETAILED DESCRIPTION

The polyethylene used in the insulation for the power cable of the invention can be a homopolymer of ethylene or a copolymer of ethylene and an alpha-olefin.

The term "polyethylene" also includes the copolymers of ethylene and an unsaturated ester described below.

The polyethylene can have a high, medium, or low density. Thus, the density can range from 0.860 to 0.960 gram per cubic centimeter.

The alpha-olefin can have 3 to 12 carbon atoms, and preferably has 3 to 8 carbon atoms. Preferred alpha-olefin can be exemplified by propylene, 1-butene, 1-hexene, 4-methyl-1-pentene, and 1-octene.

The melt index can be in the range of 1 to 20 grams per 10 minutes, and is preferably in the range of 2 to 8 grams per 10 minutes.

The ethylene polymers useful in subject invention are preferably produced in the gas phase. They can also be produced in the liquid phase in solutions or slurries by conventional techniques. They can be produced by high pressure or low pressure processes. Low pressure processes are typically run at pressures below 6.89 MPa (1000 psi) whereas high pressure processes are typically run at pressures above 103 MPa (15,000 psi).

Generally, the ethylene homopolymer is prepared by a high pressure process and the copolymers by low pressure processes.

Typical catalyst systems, which can be used to prepare these polymers are magnesium/titanium based catalyst systems, which can be exemplified by the catalyst system described in United States patent 4,302,565; vanadium based catalyst systems such as those described in United States Patent Serial Nos. 4,508,842, 5,332,793, 5,342,907, and 5,410,003; a chromium based catalyst system such as that described in United States Patent Serial No. 4,101,445; a metallocene catalyst system such as that described in United States Patent Serial Nos. 4,937,299 and 5,317,036; or other transition metal catalyst systems. Many of these catalyst systems are often referred to as Ziegler-Natta or Phillips catalyst system. Catalyst systems, which use chromium or molybdenum oxides on silica-alumina supports, are also useful.

Typical processes for preparing the polymers are also described in the aforementioned patents. Typical in situ polymer blends and processes and catalyst systems for providing same are described in United States Patent Serial Nos. 5,371,145 and 5,405,901. A conventional high pressure process is described in Introduction to Polymer Chemistry, Stille, Wiley and Sons, New York, 1962, pages 149-151. A typical catalyst for high pressure processes is an organic peroxide. The processes can be carried out in a tubular reactor or a stirred autoclave.

Examples of the polyethylene are the homopolymer of ethylene (HP-LDPE), linear low density polyethylene (LLDPE), and very low density polyethylene (VLDPE). Medium and high density polyethylenes can also be used. The homopolymer of ethylene is generally made by a conventional high pressure process. It preferably has a density in the range of 0.910 to 0.930 gram per cubic centimeter. The homopolymer can also have a melt index in the range of 1 to 5 grams per 10 minutes, and preferably has a melt index in the range of 0.75 to 3 grams per 10 minutes.

The LLDPE can have a density in the range of 0.916 to 0.925 gram per cubic centimeter. The melt index can be in the range of 1 to 20 grams per 10 minutes, and is preferably in the range of 3 to 8 grams per 10 minutes.

The density of the VLDPE, which is also linear, can be in the range of 0.860 to 0.915 gram per cubic centimeter. The melt index of the VLDPE can be in the range of 0.1 to 20 grams per 10 minutes and is preferably in the range of 0.3 to 5 grams per 10 minutes. The portion of the LLDPE and the VLDPE attributed to the comonomer (s), other than ethylene, can be in the range of 1 to 49 percent by weight based on the weight of the copolymer and is preferably in the range of 15 to 40 percent by weight.

A third comonomer can be included, for example, another alpha-olefin or a diene such as ethylidene norbornene, butadiene, 1,4-hexadiene, or a dicyclopentadiene. The third comonomer can be present in an amount of 1 to 15 percent by weight based on the weight of the copolymer and is preferably present in an amount of 1 to 10 percent by weight. It is preferred that the copolymers contain two or three comonomers inclusive of ethylene.

In addition to the polyethylene described above, another preferred resin for use in the insulation is an EPR (ethylene/propylene rubber), which includes both the ethylene/propylene copolymer (EPM) and an ethylene/propylene/diene terpolymer (EPDM). These rubbers have a density in the range of 1.25 to 1.45 grams per cubic centimeter and a Mooney viscosity (ML 1+4) at 125 degrees Celsius in the range of 10 to 40. The propylene is present in the copolymer or terpolymer in an amount of 10 to 50 percent by weight, and the diene is present in an amount of 0 to 12 percent by weight. Examples of dienes used in the terpolymer are hexadiene, dicyclopentadiene, and ethylidene norbornene. Mixtures of polyethylene and EPR are contemplated.

The resins most commonly used in semiconducting shields are elastomers of varying degrees of crystallinity from amorphous through low and medium crystallinity, preferably copolymers of ethylene and unsaturated esters. Insofar as the insulation shield is concerned, the unsaturated ester is a vinyl ester, an acrylic acid ester, or a methacrylic acid ester.

The ethylene/vinyl ester copolymer has an ester content of 15 to 40 percent by weight based on the weight of the copolymer, and in an important aspect, has an ester content of 15 to 28 percent by weight. The ethylene/acrylic or methacrylic acid copolymer has an ester content of 15 to 50 percent by weight, and preferably has an ester content of 15 to 40 percent by weight based on the weight of the copolymer.

The ethylene/unsaturated ester copolymers are usually made by conventional high pressure processes. These high pressure processes are typically run at pressures above 103 MPa (15,000 psi (pounds per square inch)). The copolymers can have a density in the range of 0.900 to 0.990 gram per cubic centimeter, and preferably have a density in
the range of 0.920 to 0.970 gram per cubic centimeter. The copolymers can also have a melt index in the range of 10 to 100 grams per 10 minutes, and preferably have a melt index in the range of 20 to 50 grams per 10 minutes. Melt index is determined under ASTM D-1238, Condition E. It is measured at 190 degrees Celsius and 2.16 kilograms.

The ester can have 4 to 20 carbon atoms, and preferably has 4 to 7 carbon atoms. Examples of vinyl esters are vinyl acetate, vinyl butyrate, vinyl pivalate, vinyl neononanoate, vinyl neodecanoate, and vinyl 2-ethylhexanoate. Vinyl acetate is preferred. Examples of acrylic and methacrylic acid esters are lauryl methacrylate ; myristyl methacrylate; palmityl methacrylate; stearyl methacrylate; 3-methacryloxy-propyltrimethoxysilane; 3-methacryloxypropyltriethoxysilane; cyclohexyl methacrylate; n-hexylmethacrylate; isodecyl methacrylate; 2-methoxyethyl methacrylate; tetrahydrofurfuryl methacrylate; octyl methacrylate; 2-phenoxyethyl methacrylate; isobornyl methacrylate; isooctylmethacrylate ; octyl methacrylate; isooctyl methacrylate; oleyl methacrylate; ethyl acrylate; methyl acrylate; t-butyl acrylate; n-butyl acrylate; and 2-ethylhexyl acrylate. Methyl acrylate, ethyl acrylate, and n-or t-butyl acrylate are preferred. In the case of alkyl acrylates and methacrylates, the alkyl group can have 1 to 8 carbon atoms, and preferably has 1 to 4 carbon atoms. The alkyl group can be substituted with an oxyalkyltrialkoxysilane, for example, or other various groups.

Nano-particles are particles which have layers and a particle size with a length in the range of from 1 to 10,000 nm and a diameter of 1 to 100 nm. The swellable nano-particles which may be used include silicate minerals with SiO layers connected with metal ions. These silicate minerals include nano clays such as montmorillonite: Na_{0.6}[(Al_{3.4}Mg_{0.6}Si₈O₂₀(OH)₄], fluoromica: Na[Mg_{5.5}Si₈O₂₀F4], saponite: Na[Mg₆Si₇O₂₀(OH)₄], fluorohectorite: Na_{0.5}[(Li_{0.5}Mg_{5.5}Si₈O₂₀F₄], laponite: Na_{0.5}[(Li_{0.5}Mg_{5.5}Si₈O₂₀(OH)₄], sepiolite : Mg₈Si₁₂O₃₀(OH)₄.nH₂O, attapulgite: MgAl₃Si₈O₂₀(OH)₃nH₂O, magadiite: NaSi₇O₁₃(OH)₃4H₂O and synthetic hydrotalcite: Mg₆Al₂CO₃(OH)₁₆4H₂O all having a length of 100 to 1,000 nm and a diameter of 1 to 10 nm may be used. Swellable nano-particles of carbon single-walled nanotubes having a length of 1 to 20 nm and a diameter of 3 to 15 nm and carbon nanotube fibrils having a length of 1000 to 10,000 nm (1 to 10 microns) and a diameter of 100 nm also may be used.

The nano-particles, such as naturally occurring clay materials, are hydrophilic minerals. As such, they are not compatible with non-polar olefinic polymers like polyethylene. In addition in the case of silicate minerals, the layers are held tightly together by the presence of ions, such as sodium. Thus, to improve their compatibility and ability to interact with organic polymers, the nano-particles are treated with organic swelling agents in the form of onium ions such as ammonium, phosphonium, sulfonium and imidazolium ions.

Examples of onium ions include ammonium ion (H₄N+), trimethylammonium ion (-HN+(CH₃)₃), tri-methyl phosphonium ion (HP+(CH₃)₃), and dimethyl sulfonium ion (HS+(CH₃)₂).

Additional examples of swelling agents include di(hydrogenated tallowalkyl)dimethyl ammonium chloride commercially available as Arquad 2HT-75 (from Azko Nobel), dicocoalkyldimethyl ammonium chloride commercially available as Arquad 2C-75, cocoalkyltrimethyl ammonium chloride commercially available as Arquad C-50, Triphenyl, n-hexadecyl phosphonium commercially available as TPHDP, 1,2-dimethyl-3 -n-hexadecyl imidazolium commercially available as DMHDI, 1:1 octadecylamine and HCl commercially available as generic, dioctadecyldimethyl ammonium bromide commercially available as DODAB.

The onium ions can replace the inorganic ions in the layered silicate minerals. In addition the onium ions contain aliphatic tails that can convert the normally hydrophilic character of silicate minerals from organophobic to organophilic. During this ion exchange, the minerals swell and allow the layers to be expanded, thus facilitating interaction with polymeric molecules. A detailed description of treating nano-clays can be found in United States Patent No. 4,810,734.

In view of the character of the nano-particles, the nano-particles are treated with the swelling agent, such as the surfactant-onium ion compound, in a dispersion medium. The dispersion medium disperses the layered silicate in the dispersion medium, thereby allowing the layered silicate easily come into contact with the swelling agent. The kind of dispersion medium differs depending on the clay mineral, swelling agent, and polymer used. The preferred dispersion medium is one which
disperses the clay mineral uniformly and exhibits good miscibility with the swelling agent and monomer.

Examples of the dispersion medium include water, methanol, ethanol, propanol, isopropanol, ethylene glycol, 1,4-butanediol, glycerin, dimethyl sulfoxide, N, N-dimethylformamide, acetic acid, formic acid, pyridine, aniline, phenol, nitrobenzene, acetonitrile, acetone, methyl ethyl ketone, chloroform, carbon disulfide, propylene carbonate, 2-methoxyethanol, ether, carbon tetrachloride, and n-hexane.

They are used alone or in combination with one another. One or more than one kind of dispersion medium should preferably be selected from water, methanol, and ethanol in the case where the clay mineral is montmorillonite.

The swelling agent is effective to permit the nano-particles to provide the insulation shield with the ability to resist thermal aging as described herein.

The nano-particles are present at a level of at least one weight percent, and preferably from 25 to 55 weight percent.

In order to provide a semiconducting shield, it also is necessary to incorporate conductive particles into the composition. These conductive particles are provided by particulate carbon black, which is referred to above. Useful carbon blacks can have a surface area of 20 to 1000 square meters per gram. The surface area is determined under ASTM D 4820-93a (Multipoint B. E. T. Nitrogen Absorption). The carbon black is used in the semiconducting shield composition in an amount of 10 to 50 percent by weight based on the weight of the insulation shield layer, and is preferably used in an amount of 30 to 40 percent by weight. Both standard conductivity and high conductivity carbon blacks can be used with standard conductivity blacks being preferred. Examples of conductive carbon blacks are the grades described by ASTM N550, N472, N351, N110, and acetylene black.

Another component, which may be, but is not desirably in the insulation shield is a copolymer of acrylonitrile and butadiene (NBR). To enjoy the advantages of the invention, NBR should be present in the copolymer in an amount of less than five percent by weight, preferably less than 3 weight percent and, in an important aspect less than one to zero weight percent. This copolymer is also known as a nitrile rubber or an acrylonitrile/butadiene copolymer rubber. The density can be, for example, 0.98 gram per cubic centimeter and the Mooney viscosity measured at 100 degrees can be (ML 1+4) 50.

The polymers in the insulation shield composition which are used to make the insulation shield are crosslinked. This is accomplished in a conventional manner with a free radical cross-linking reaction initiated by an organic peroxide or by irradiation, the former being preferred.

The amount of organic peroxide used can be in the range of 0.2 to 5 percent by weight of organic peroxide based on the weight of the layer in which it is included, and is preferably in the range of 0.4 to 2 parts by weight. Organic peroxide crosslinking temperatures, as defined by a one-minute half-life for the peroxide decomposition, can be in the range of 150 to 250 degrees Celsius and are preferably in the range of 170 to 210 degrees Celsius. Examples of organic peroxides useful in crosslinking are dicumyl peroxide; lauroyl peroxide; benzoyl peroxide; tertiary butyl perbenzoate; di(tertiary-butyl) peroxide; cumene hydroperoxide; 2,5-dimethyl-2,5-di(t-butyl-peroxy)hexyne-3; 2,5-di-methyl-2,5-di(t-butyl-peroxy)hexane; tertiary butyl hydroperoxide; isopropyl percarbonate; and alpha, alpha'-bis(tertiary-butylperoxy)diisopropylbenzene.

Conventional additives, which can be introduced into the composition, are exemplified by antioxidants, coupling agents, ultraviolet absorbers or stabilizers, anti-static agents, pigments, dyes, nucleating agents, reinforcing fillers or polymer additives, slip agents, plasticizers, processing aids, lubricants, viscosity control agents, tackifiers, anti-blocking agents, surfactants, extender oils, metal deactivators, voltage stabilizers, flame retardant fillers and additives, crosslinking agents, boosters, and catalysts, and smoke suppressants. Additives and fillers can be added in amounts ranging from less than 0.1 to more than 50 percent by weight based on the weight of the layer in which it is included.

Examples of antioxidants are: hindered phenols such as tetrakis[methylene(3,5-di-tert-butyl-4-hydroxyhydro-cinnamate)]methane, bis[(beta-3,5-ditert-butyl-4-hydroxybenzyl)-methylcarboxyethyl)]sulphide, 4,4'-thiobis(2-methyl-6-tert-butylphenol), 4,4'-thiobis(2-tert-butyl-5-methylphenonl), 2,2'-thiobis(4-methyl-6-tert-butylphenol),and thiodiethylene bis(3,5-di-tert-butyl-4-hydroxy)hydrocinnamate; phosphites and phosphonites such as tris(2,4-di-tert-butylphenyl)phosphite and di-tert-butylphenyl-phosphonite, thio compounds such as dilaurylthiodipropionate, dimyristylthiodipropionate, and distearylthiodipropionate; various siloxanes; and various amines such as polymerized 2,2,4-trimethyl-1,2-dihydroquinoline, 4,4'-bis (alpha, alpha-demethylbenzyl) diphenylamine, and alkylated diphenylamines. Antioxidants can be used in amounts of 0.1 to 5 percent by weight based on the weight of the layer in which it is included.

### EXAMPLES

### Sample Preparation

The strippable shield compositions were prepared by mixing the components in a laboratory batch mixer or a 150-mm Buss co-kneader at 180 degrees Celsius. Peroxide was added to pre-mixed formulations on a two-roll mill at 100 degrees Celsius or a Henschel mixer at 25 degrees Celsius.

The plaque adhesion examples were prepared by compression molding pre- crosslinked thermoplastic plaques followed by crosslinking both plaques at 200 degrees Celsius for 15 minutes.

The power cables were extruded and manufactured on a commercial scale continuous vulcanization line at a line speed of 9.1 m/min.

### Test Method for Plaque Adhesion

Single plaques are prepared from insulation shield formulation pellets and insulation layer formulation pellets by compression molding. Prior to compression molding, the pellets are melted on a two-roll mill. An organic peroxide is added if crosslinking is desired.

The temperature for compression molding of shield pellets is 100 degrees Celsius. Approximately 65 grams of shield formulation are used to prepare a 0.76 mm (30-mil) plaque.

The temperature for compression molding of insulation pellets is 130 degrees Celsius. Approximately 135 grams of insulation formulation are used to prepare a 3.18 mm (125-mil) plaque.

The weighed material is sandwiched between two Mylar plastic sheets and is separated from the press platens by sheets of aluminum foil. The following typical pressures and time cycles are used for the compression molding: a) 13.8 MPa (2000 psi (pounds per square inch)) for 5 minutes ; b) 344 MPa (50,000 psi) for 3 minutes; then c) quench cooling pressure of 344 MPa (50,000 psi) for 10 minutes.

An adhesion plaque sandwich is then made by curing two single plaques under pressure (one shield plaque and one insulation plaque). The Mylar™ sheets are removed from the single plaques and any excess is trimmed. The 3.18 mm (125-mil) trimmed insulation plaque is placed in a 1.91 mm (75 mil mold). At least 5.08 cm (2 inches) on the top edge of the insulation plaque is covered with a strip of Mylar sheet to prevent adhesion to the shield plaque in a region that will form a "pull-tab". The 0.76 mm (30 mil) shield plaque is then placed on top of the insulation plaque. The sandwich is separated from the press platens by Mylar sheets, and placed in the press. The press is then closed and a pressure of 6.89 MPa (1000 psi) is maintained for 4 minutes at 130 degrees Celsius. Then steam is introduced into the press at 190 degrees Celsius (1.24 MPa (180 psig)). A cure cycle of 138 MPa (20,000 psi) for 25 minutes (including the time to heat up from 130 degrees Celsius to 190 degrees Celsius) is then effected followed by a quench cooling cycle of 138 MPa (20,000 psi) for 15 minutes.

The sandwich is removed from the press, the Mylar sheets are removed, the excess is trimmed, and the sandwich is cut into five samples (each 3.81 cm (1.5 inches) wide by 15.2 cm (6 inches) long). These samples are placed in a climate controlled room at 23 degrees Celsius and 50 percent relative humidity overnight before any further testing.

A 1.27 cm (one-half inch) strip is marked in the center of each sample. A razor is used to cut along each line so that the black material is cut all the way through to the insulation plaque. A stripping test is achieved with the use of a rotating wheel and an Instron™ or similar tensile apparatus. Each sample is mounted to the wheel with the center strip mounted in the jaws of the tensile machine in such a manner that the tensile machine will pull the center strip from the sandwich plaque, while the wheel will rotate to maintain the perpendicular configuration of the surface of the plaque to the direction of tensile force. The jaws of the tensile machine shall travel at a linear speed of 50.8 cm (20 inches) per minute during the test, and should be stopped when 1.27 cm (one-half inch) of unpeeled material remains. The Maximum Load and Minimum Load are to be reported from the test while disregarding the first and last 2.54 cm (inch) stripped. The plaque strip force is equal to the Maximum Load.

### Test Method for Monsanto Disc Rheometer (MDR).

To measure the degree of cure of strippable shield compounds, an instrument called a Moving Die Rheometer (MDR) 2000, described in ASTM D-5289, manufactured by Alpha Technologies, is used here for illustration. The MDR Mh is
the maximum torque which represents the total cure level of a sample, and it is directly related to the total amount of active peroxide in the polymeric formulations.

For accurate comparison of a material's scorch characteristics, the MDR Mh's should be comparable. Test conditions used for evaluating total cure by MDR are 182 degrees Celsius; 0.5 degree arc; 100 cycles per minute oscillation; and 12 minutes test time. Torque is reported in units of N m (pounds-inch (lbs-in)). The total cure level of the examples is approximately comparable.

### Reference Examples 1-3 and Comparative Examples 4-6

Six strippable insulation shield formulations were evaluated. In addition to the components and weight percents indicated in Table I, the formulations also contained 2.0 weight percent of wax (sold commercially as Kemamide W40), 0.8 weight percent of 4, 4'-Bis (alpha, alpha-dimethyl-benzyl)di-phenylene (sold commercially as Naugard 445), and 0.65 weight percent of a blend of t-butyl cumyl peroxide and bis-(t-butyl peroxy iso-propyl) benzene (sold commercially as D-446B).

Table I recites the results of the evaluations.

**TABLE I**

| Components | Example 1* | Example 2* | Example 3* | Comparative Example 4 | Comparative Example 5 | Comparative Example 6 |
|---|---|---|---|---|---|---|
| EVA copolymer w/28% vinyl-acetate (Elvax 240) | 62.2 | 60.2 | 58.2 | 63.2 | 63.2 | 0.0 |
| EVA copolymer w/33% vinyl-acetate (Elvax M987W) | 0.0 | 0.0 | 0.0 | 0.0 | 0.0 | 51.2 |
| NBR (Nipol DP-5161) | 0.0 | 0.0 | 0.0 | 0.0 | 0.0 | 10.1 |
| Carbon Black | 34.0 | 34.0 | 34.0 | 34.0 | 34.0 | 36.0 |
| Montmorillonite clay, which is treated with 30% Arquad, a quaternary ammonium salt (Nanomer L30P) | 1.0 | 3.0 | 10.0 | 0.0 | 0.0 | 0.0 |
| Aerosil R972 | 0.0 | 0.0 | 0.0 | 0.0 | 3.0 | 0.0 |

| Properties | | | | | | |
|---|---|---|---|---|---|---|
| Plaque Adhesion on the commercial insulation HFDB-4202 | | | | | | |
| (N/cm) | 27 | 14 | 2 | 45 | 50 | 35 |

| Monsanto Disc Rheometer (MDR 2000) Maximum Torque at 182 degrees Celsius and 0.5 degrees arc | | | | | | |
|---|---|---|---|---|---|---|
| (N m) ((lb-in)) | 0.45 (4.0) | 0.50 (4.4) | 0.88 (7.8) | 0.43 (3.8) | 0.45 (4.0) | 1.02 (9.0) |

| | | | | | | |
|---|---|---|---|---|---|---|
| *Reference Example (not within scope of currently claimed invention) | | | | | | |

The unexpected behavior of nano-clay is readily apparent as the plaque adhesion value decreases with increasing concentration of nano-clay in the strippable shield compositions. The nano-clay used in the examples has D-spacing which is the distance between adjacent layers of 40 nanometers.

Comparative Example 5 contains 3 weight percent of fumed silica gel that does not contain surface treatment and has an average particle size of 16 nanometers.

Given the similar chemical structure of silica gel and montmorillonite, Comparative Example 5 illustrates that untreated nano-particles do not yield the same effect as nano-clays that are treated with surfactants/swelling agents.

Comparative Example 6 is a commercial strippable shield compound called HFDA-0693 commercially available from The Dow Chemical Company.

The exemplified formulations use a lower VA copolymer than Comparative Example 6, contain no nitrile butadiene rubber, and
achieve lower adhesion. High VA copolymer is stickier and creates pellet agglomeration problems when the material is exposed to high temperatures, for example, above 30 degrees Celsius. Thus, the use of a lower VA copolymer will be able to alleviate such a stickiness problem.

### Comparative Example 6 and Examples 7-9

Three additional strippable shield compositions (as power cables) were evaluated against the formulation of Comparative Example 6. In addition to the components and weight percents indicated in Table II, the formulations also contained 36.0 weight percent carbon black, 2.0 weight percent of wax (sold commercially as Kemamide W40), and 0.8 weight percent of 4, 4'-Bis (alpha, alpha-dimethyl-benzyl)di-phenylene (sold commercially as Naugard 445).

Table II recites the results of the evaluations.

**TABLE II**

| Components | Comparative Example 6 | Example 7* | Example 8* | Example 9* |
|---|---|---|---|---|
| EVA copolymer w/33% vinyl-acetate (Elvax CM4987W) | 51.2 | 54.2 | 52.2 | 50.2 |
| NBR (Nipol DP-5161) | 10.0 | 5.0 | 5.0 | 5.0 |
| Montmorillonitie clay, which is treated with 30% Arquad, a quaternary ammonium salt (Nanomer I.30P) | 0.0 | 1.0 | 2.0 | 3.0 |
| Blend of t-butyl cumyl peroxide and bis-(t-butyl peroxy iso-propyl) benzene (D-446B) | 0.65 | 0.8 | 0.65 | 0,6 |

| Properties | | | | |
|---|---|---|---|---|
| Strip tension on cables made with HFDB-8202 at 23 degrees Celsius when fresh | | | | |
| (N/cm) | 42 | 74 | 41 | 23 |

| Strip tension on cables made with HFDB-8202 at 23 degrees Celsius after 100 degrees Celsius for 2 weeks | | | | |
|---|---|---|---|---|
| (N/cm) | | 34 | 19 | 2 |

| Monsanto Disc Rheometer (MDR 2000) Maximum Torque at 182 degrees Celsius and 0.5 degrees arc | | | | |
|---|---|---|---|---|
| (N m) ((lb-in)) | 1.02 (9.0) | 1.12 (9.9) | 1.01 (8.9) | 0.99 (8.8) |

| | | | | |
|---|---|---|---|---|
| *Reference Example (not within scope of currently claimed invention) | | | | |

Table II demonstrates that the retention of strip tension after thermal aging of strippable shield compounds containing nano-clay and 5 weight percent nitrile butadiene rubber is much higher than that of Comparative Example 6. Compositions can be used to fulfill the requirement of AEIC CS8 specifications on having strip tension higher than 10.5 N/cm (3 lb/0.5 inch).

### Comparative Examples 10-12

Three comparative examples were evaluated to determine whether the surfactant that is used to treat the nano-clay alone was effective in affecting the adhesion between the strippable shield and insulation layers. In addition to the components and weight percents indicated in Table III, the formulations also contained 36.0 weight percent carbon black, 2.0 weight percent of wax (sold commercially as Kemamide W40), 0.8 weight percent of 4,4'-Bis (alpha,alpha-dimethyl-benzyl)di-phenylene (sold commercially as Naugard 445), and 1.0 weight percent of a blend of t-butyl cumyl peroxide and bis-(t-butyl peroxy iso-propyl)benzene (sold commercially as D-446B).

Comparative Examples 11 and 12 contained 1.5 times the amount of surfactant that would be present in the treated nano-clay. The typical level of surfactant present in treated montmorillonite is 30 percent by weight; thus, 3 percent by weight of nano-clay contains 0.9 weight percent surfactant.

The only observable effect was the negative impact on cure as indicated by a lower MDR maximum torque.

Table III recites the results of the evaluations.

**TABLE III**

| Components | Comparative Example 10 | Comparative Example 11 | Comparative Example 12 |
|---|---|---|---|
| EVA copolymer w/33% vinyl-acetate (Elvax CM4987W) | 61.2 | 59.7 | 59.7 |
| Arquad 2HT-75 | 0.0 | 1.5 | 0.0 |
| Armeen 2HT | 0.0 | 0.0 | 1.5 |

| Properties | | | |
|---|---|---|---|
| Plaque adhesion on HFDB-4202 | | | |
| (N/cm) | 48 | 46 | 46 |

| Monsanto Disc Rheometer (MDR 2000) Maximum Torque at 182 degrees Celsius and 0.5 degrees arc | | | |
|---|---|---|---|
| (N m) ((lb-in)) | 0.89 (7.9) | 0.70(6.2) | 0.59 (5.2) |

## Claims

1. Power cable comprising:
(a) an electrical conductor;
(b) an insulation layer which surrounds the electrical conductor; and
(c) an insulation shield layer which surrounds and is contiguous with the insulation layer,
the insulation shield layer comprising a cross-linked composition made from a blend which comprises
(i) from 15 to 40 weight percent of a copolymer of ethylene and an unsaturated ester selected from the group consisting of vinyl esters, acrylic acid esters, methacrylic acid esters and mixtures thereof;
(ii) at least 1 weight percent nano-particles which have been contacted with a swelling agent which includes an onium ion; and
(iii) from 10 to 50 weight percent carbon black,
wherein the copolymer, the nano-particles and the carbon black being in amounts which will provide the insulation shield with a strip tension of greater than 13.3 N per 1.27 cm (3 pounds per half inch) at 23 degrees Celsius after being stored at 100 degrees Celsius for 2 weeks and an initial strip force of not greater than 106.8 N per 1.27 cm (24 pounds per half inch) at 23 degrees Celsius, wherein the strip tension and initial strip force is determined using the Test Method for Plaque Adhesion disclosed in the description.

2. The power cable as recited in claim 1 wherein the swelling agent is an onium ion.

3. The power cable as recited in claims 1 and 2 wherein the composition further includes a free radical cross-linker.

4. The power cable as recited in claim 1 wherein the copolymer in the insulation shield comprises from 0 to less than 5 weight percent nitrile butadiene rubber.

## Patentansprüche

1. Ein Stromkabel, beinhaltend:
(a) einen elektrischen Leiter;
(b) eine Isolierschicht, welche den elektrischen Leiter umgibt; und
(c) eine Isolierabschirmungsschicht, welche die Isolierschicht umgibt und an diese angrenzt,
wobei die Isolierabschirmungsschicht eine vernetzte Zusammensetzung beinhaltet, die aus einem Gemisch gefertigt ist, welches Folgendes beinhaltet:
(i) zu 15 bis 40 Gewichtsprozent ein Copolymer von Ethylen und einem ungesättigten Ester, ausgewählt aus der Gruppe, bestehend aus Vinylestern, Acrylsäureestern, Methacrylsäureestern und Mischungen davon;
(ii) zu mindestens 1 Gewichtsprozent Nanopartikel, die mit einem Quellungsmittel in Kontakt gebracht worden sind, das ein Onium-Ion umfasst; und
(iii) zu 10 bis 50 Gewichtsprozent Ruß,
wobei das Copolymer, die Nanopartikel und der Ruß in Mengen vorliegen, die der Isolierabschirmung bei 23 Grad Celsius nach Lagerung bei 100 Grad Celsius über 2 Wochen eine Abziehspannung von mehr als 13,3 N pro 1,27 cm (3 Pfund pro halbem Zoll) und eine anfängliche Abziehkraft bei 23 Grad Celsius von nicht mehr als 106,8 N pro 1,27 cm (24 Pfund pro halbem Zoll) verleihen, wobei die Abziehspannung und die anfängliche Abziehkraft unter Verwendung des Testverfahrens für Plattenhaftung, das in der Beschreibung offenbart ist, bestimmt werden.

2. Stromkabel gemäß Anspruch 1, wobei das Quellungsmittel ein Onium-Ion ist.

3. Stromkabel gemäß den Ansprüchen 1 und 2, wobei die Zusammensetzung ferner einen Radikalvernetzer umfasst.

4. Stromkabel gemäß Anspruch 1, wobei das Copolymer in der Isolierabschirmung zu 0 bis weniger als 5 Gewichtsprozent Nitrilbutadienkautschuk beinhaltet.

## Revendications

1. Câble électrique comprenant :
(a) un conducteur électrique ;
(b) une couche d'isolation qui entoure le conducteur électrique ; et
(c) une couche écran d'isolation qui entoure et est contiguë à la couche d'isolation, la couche écran d'isolation comprenant une composition réticulée fabriquée à partir d'un mélange homogène qui comprend
(i) de 15 à 40 pour cent en poids d'un copolymère d'éthylène et d'un ester insaturé sélectionné dans le groupe constitué d'esters vinyliques, d'esters d'acide acrylique, d'esters d'acide méthacrylique et de mélanges de ceux-ci ;
(ii) au moins 1 pour cent en poids de nanoparticules qui ont été mises en contact avec un agent gonflant qui inclut un ion onium ; et
(iii) de 10 à 50 pour cent en poids de noir de carbone,
dans lequel le copolymère, les nanoparticules et le noir de carbone sont présents dans des quantités qui donneront à l'écran d'isolation une tension de dénudage de plus de 13,3 N par 1,27 cm (3 livres par demi pouce) à 23 degrés Celsius après avoir été stocké à 100 degrés Celsius pendant 2 semaines et une force de dénudage initiale de pas plus de 106,8 N par 1,27 cm (24 livres par demi pouce) à 23 degrés Celsius, la tension de dénudage et la force de dénudage initiale étant déterminées en utilisant la Méthode d'essai pour adhérence de plaque divulguée dans la description.

2. Le câble électrique tel qu'énoncé dans la revendication 1 dans lequel l'agent gonflant est un ion onium.

3. Le câble électrique tel qu'énoncé dans les revendications 1 et 2 dans lequel la composition comporte en sus un agent réticulant à radicaux libres.

4. Le câble électrique tel qu'énoncé dans la revendication 1 dans lequel le copolymère dans l'écran d'isolation comprend de 0 à moins de 5 pour cent en poids de caoutchouc nitrile butadiène.
